# FASCICULE DE BREVET EUROPEEN

(11) **EP 4 553 465 B1**
(45) Date de publication et mention de la délivrance du brevet: **24.06.2026**
(21) Numéro de dépôt: 24212330.5
(22) Date de dépôt: 12.11.2024
(51) Int. Cl.: G01J 5/02, G01J 5/0813, G01J 5/08, G01J 5/20

(54) **DETECTEUR THERMIQUE LARGE BANDE ET A PLUSIEURS CAVITES QUART D'ONDE**
BREITBANDIGER THERMISCHER DETEKTOR MIT MEHREREN VIERTELWELLEN-KAVITÄTEN
WIDE-BAND, MULTI-CAVITY, THERMAL DETECTOR

(30) Priorité: 13.11.2023 FR 2312370
(43) Date de publication de la demande: 14.05.2025
(73) Titulaire: Commissariat à l'Energie Atomique et aux Energies Alternatives, 75015 Paris (FR)
(72) Inventeur: PERRILLAT-BOTTONET, Thomas, 38054 Grenoble cedex 09 (FR); YON, Jean-Jacques, 38054 Grenoble cedex 09 (FR)
(74) Mandataire: Santarelli

(56) Documents cités:
- WO-A1-2020/084242
- US-A1- 2010 148 067
- SANG-WOOK HAN ET AL: "Multilayer Fabry-Perot Microbolometers for Infrared Detection", INFRARED AND MILLIMETER WAVES AND 13TH INTERNATIONAL CONFERENCE ON TER AHERTZ ELECTRONICS, 2005. IRMMW-THZ 2005. THE JOINT 30TH INTERNATIONAL CONFERENCE ON WILLIAMSBURG, VA, USA 19-23 SEPT. 2005, PISCATAWAY, NJ, USA,IEEE, vol. 2, 19 September 2005 (2005-09-19), pages 646 - 647, XP010875230, ISBN: 978-0-7803-9348-6, DOI: 10.1109/ICIMW.2005.1572707
- VARPULA AAPO ET AL: "High-performance infrared thermoelectric bolometers based on nanomembranes", SPIE PROCEEDINGS; [PROCEEDINGS OF SPIE ISSN 0277-786X], SPIE, US, vol. 11289, 26 February 2020 (2020-02-26), pages 112891O - 112891O, XP060130788, ISBN: 978-1-5106-3673-6, DOI: 10.1117/12.2542194

## Description

### DOMAINE TECHNIQUE

Le domaine de l'invention est celui des dispositifs de détection d'un rayonnement électromagnétique, par exemple infrarouge ou térahertz, comportant au moins un détecteur thermique à membrane absorbante suspendue au-dessus du substrat de lecture. L'invention s'applique notamment aux domaines de l'imagerie infrarouge, de la thermographie, de la détection de gaz, entre autres.

### ÉTAT DE LA TECHNIQUE ANTÉRIEURE

Les dispositifs de détection de rayonnement électromagnétique peuvent comprendre une matrice de détecteurs thermiques comportant chacun une membrane apte à absorber le rayonnement électromagnétique à détecter et contenant un transducteur thermomètre tel qu'un matériau thermistance. Pour assurer l'isolation thermique des transducteurs thermomètres vis-à-vis du substrat de lecture, les membranes absorbantes sont habituellement suspendues au-dessus du substrat de lecture par des piliers d'ancrage, et sont isolées thermiquement de celui-ci par des bras de maintien. Ces piliers d'ancrage et bras de maintien présentent également une fonction électrique en connectant les membranes absorbantes au circuit de lecture généralement disposé dans le substrat. La membrane absorbante comporte un absorbeur, par exemple une couche mince métallique, adapté à absorber le rayonnement électromagnétique à détecter, qui est couplé thermiquement avec le transducteur thermomètre.

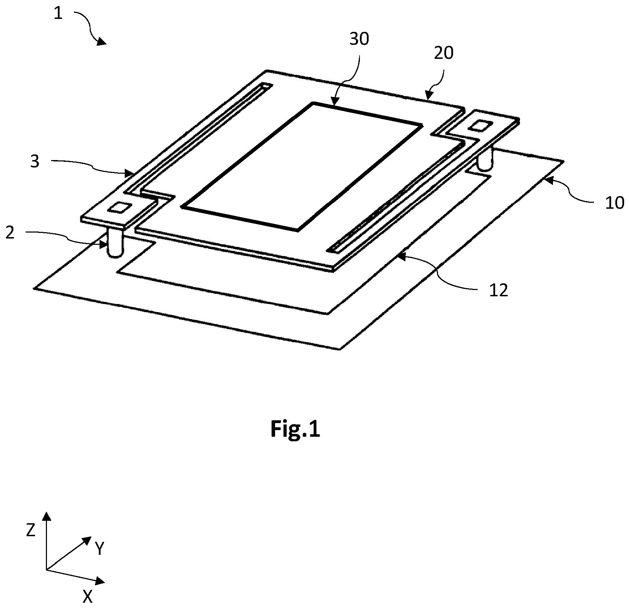

La figure 1 est une vue en perspective d'un exemple de détecteur thermique 1 selon un exemple de l'art antérieur, ici adapté à absorber un rayonnement infrarouge de la bande spectrale LWIR *(Long Wavelength Infrared,* en anglais) dont la longueur d'onde centrale est comprise entre 8µm et 12µm environ.

Le détecteur thermique 1 comporte une membrane absorbante 20 suspendue au-dessus d'un substrat de lecture 10 par des piliers d'ancrage 2 et isolée thermiquement de celui-ci par des bras de maintien et d'isolation thermique 3. Ces piliers d'ancrage 2 et bras d'isolation thermique 3 présentent également une fonction électrique en reliant électriquement la membrane absorbante 20 à un circuit de lecture situé dans le substrat de lecture 10.

La membrane 20 comporte ici un absorbeur 30 adapté à absorber le rayonnement électromagnétique à détecter et un transducteur thermomètre en contact thermique avec l'absorbeur. Le transducteur thermomètre peut être un matériau présentant une résistance électrique qui varie avec son échauffement (thermistor). Il peut s'agir notamment de silicium amorphe ou d'un oxyde de vanadium. La membrane absorbante 20 est espacée verticalement d'un réflecteur 12 d'une distance déterminée de manière à former une cavité interférentielle quart d'onde optimisant l'absorption par la membrane absorbante 20 du rayonnement électromagnétique à détecter. Un tel absorbeur est alors généralement appelé absorbeur de Salisbury.

Le document WO2020/084242A1 décrit deux configurations structurelles de la membrane absorbante, qui contient un absorbeur de Salisbury similaire à celui de la fig.1, c'est-à-dire un absorbeur en couche mince situé à une distance h égale à λ_{c}/4n_{eq}, où λ_{c} est la longueur d'onde centrale de la bande spectrale totale de détection Δλₜₒₜ (ici 8-14µm) et où n_{eq} est un indice de réfraction équivalent du milieu associé à la cavité quart d'onde. L'absorbeur présente généralement une résistance de surface proche de l'impédance du vide Z₀=377Ω.

Dans une première configuration, les électrodes de polarisation assurent une fonction d'absorbeur du rayonnement lumineux dans la bande spectrale de détection Δλₜₒₜ. Elles sont donc espacées verticalement du réflecteur d'une distance telle que, compte-tenu des matériaux présents dans la cavité quart d'onde, l'absorption soit optimale pour la longueur d'onde centrale λ_{c1} (ici autour de 11µm) de la bande spectrale de détection Δλₜₒₜ (8-14µm).

Dans une deuxième configuration, les électrodes de polarisation n'assurent pas la fonction d'absorbeur. Aussi, un absorbeur en couche mince est situé sur le transducteur thermomètre, à la perpendiculaire de l'espacement latéral entre les deux électrodes de polarisation. Ainsi, l'absorbeur ne recouvre pas verticalement ces dernières. Il est donc espacé verticalement du réflecteur d'une distance telle que, compte-tenu des matériaux présents dans la cavité quart d'onde, l'absorption soit optimale pour la longueur d'onde centrale λ_{c1} de la bande spectrale de détection Δλₜₒₜ.

Il existe cependant un besoin d'élargir la bande spectrale de détection Δλₜₒₜ, notamment à de plus petites longueurs d'onde, tout en gardant un taux d'absorption uniformément élevé (par exemple au moins égal à 70% dans toute la bande spectrale de détection). Cependant, il est connu que le spectre d'absorption d'un tel absorbeur est limité par la présence d'une antirésonance à une longueur d'onde λ_{c}/2n_{eq}, limitant ainsi l'absorption aux basses longueurs d'onde et ne permettant pas d'élargir la bande spectrale de détection Δλₜₒₜ.

Notons que le document US2010/0148067A1 décrit une autre configuration d'une membrane absorbante, où un premier absorbeur est formé par les électrodes de polarisation et est situé au-dessus du transducteur thermomètre. Il présente une forme en peigne interdigité, et est espacé du réflecteur pour former une cavité quart d'onde optimisant l'absorption dans une bande spectrale Δλₜₒₜ centrée sur la longueur d'onde de 10µm.

La membrane absorbante comporte un deuxième absorbeur, situé en-dessous de l'absorbeur, et destiné à absorber le rayonnement lumineux dans la même bande spectrale Δλₜₒₜ qui n'aurait pas été absorbé par l'absorbeur supérieur. L'objectif ici est d'améliorer l'absorbance de la membrane. Cependant, la bande spectrale de détection n'est pas élargie.

### EXPOSÉ DE L'INVENTION

L'invention a pour objectif de remédier au moins en partie aux inconvénients de l'art antérieur, et plus particulièrement de proposer un détecteur thermique présentant un spectre d'absorption large bande tout en gardant une absorption uniformément élevée sur toute la bande spectrale de détection.

Pour cela, l'objet de l'invention est un détecteur thermique d'un rayonnement électromagnétique dans une bande spectrale prédéfinie Δλₜₒₜ, comportant :
∘ un substrat de lecture, comportant : un circuit de lecture ; un réflecteur adapté à réfléchir le rayonnement électromagnétique ;
∘ une membrane absorbante, suspendue au-dessus du substrat de lecture, isolée thermiquement du substrat de lecture, comportant un transducteur thermomètre connecté électriquement au circuit de lecture, et comportant :
   - un premier absorbeur en couche mince, d'une surface totale S₁, couplé thermiquement au transducteur thermomètre, et adapté à absorber le rayonnement électromagnétique dans une sous-bande spectrale Δλ₁ de la bande spectrale Δλₜₒₜ, centrée sur une longueur d'onde λ_{c1}, et est espacé du réflecteur d'une valeur h₁ égale à λ_{c1}/4n_{eq1} de manière à former avec celui-ci une première cavité quart d'onde C₁ pour la longueur d'onde λ_{c1}, n_{eq1} étant un indice de réfraction du milieu associé à la première cavité quart d'onde C₁ ;
   - au moins un deuxième absorbeur en couche mince, d'une surface totale S₂, couplé thermiquement au transducteur thermomètre, disposé dans la membrane absorbante de sorte à ne pas être recouvert par le premier absorbeur.

Selon l'invention, le deuxième absorbeur est adapté à absorber le rayonnement électromagnétique dans une sous-bande spectrale Δλ₂ de la bande spectrale Δλₜₒₜ, centrée sur une longueur d'onde λ_{c2}, et est espacé du réflecteur d'une valeur h₂ égale à λ_{c2}/4n_{eq2} de manière à former avec celui-ci une deuxième cavité quart d'onde C₂ pour la longueur d'onde λ_{c2}, n_{eq2} étant un indice de réfraction du milieu associé à la deuxième cavité quart d'onde C₂, la sous-bande spectrale Δλ₂ étant centrée sur la longueur d'onde λ_{c2} égale à λ_{c1}/2 à plus ou moins 2µm près.

De plus, les premier et deuxième absorbeurs présentent des surfaces totales telles qu'un rapport de surface S₂/S₁ est compris entre 0.5 et 3.

Certains aspects préférés mais non limitatifs de ce détecteur thermique sont les suivants.

Le premier absorbeur peut reposer sur le transducteur thermomètre.

Le deuxième absorbeur peut s'étendre dans la membrane absorbante sans être recouvert par le transducteur thermomètre.

Le deuxième absorbeur peut être formé par des parties d'une couche métallique, formant, d'une part, des pistes de polarisation au niveau de bras de maintien assurant le maintien et l'isolation thermique de la membrane absorbante, et d'autre part, des électrodes de polarisation venant au contact du transducteur thermomètre.

La couche métallique peut s'étendre de manière plane dans les bras de maintien et dans la membrane absorbante.

Le détecteur thermique peut comporter un troisième absorbeur adapté à absorber le rayonnement électromagnétique dans une sous-bande spectrale Δλ₃ de la bande spectrale Δλₜₒₜ, centrée sur une longueur d'onde λ_{c3}, et espacé du réflecteur d'une valeur h₃ égale à λ_{c3}/4n_{eq3} de manière à former avec celui-ci une cavité quart d'onde C₃ pour une longueur d'onde λ_{c3}, n_{eq3} étant un indice de réfraction du milieu associé à la cavité quart d'onde C₃, la longueur d'onde λ_{c3} étant située entre les longueurs d'onde λ_{c1} et λ_{c2}.

La distance h₃ peut être égale à la distance h₂, le troisième absorbeur étant recouvert par le transducteur thermomètre.

Le détecteur thermique peut comporter au moins un absorbeur adapté à absorber le rayonnement électromagnétique dans une sous-bande spectrale Δλ₄ de la bande spectrale Δλₜₒₜ, centrée sur une longueur d'onde λ_{c4}, et espacé du réflecteur d'une valeur h₄ égale à λ_{c4}/4n_{eq4} de manière à former avec celui-ci une cavité quart d'onde C₄ pour une longueur d'onde λ_{c4}, n_{eq4} étant un indice de réfraction du milieu associé à la cavité quart d'onde C₄. L'absorbeur de la cavité quart d'onde C₄ peut être situé dans une partie plane de la membrane absorbante formant un décrochement par rapport à un plan principal dans lequel s'étend une couche métallique formant des pistes de polarisation situées dans des bras de maintien et des électrodes de polarisation au contact du transducteur thermomètre.

La bande spectrale de détection Δλₜₒₜ peut comprendre la bande spectrale LWIR allant de 8 à 12µm.

Le détecteur thermique peut présenter une absorption au moins égale à 80% dans toute la bande spectrale de détection Δλₜₒₜ.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique et partielle, en perspective, d'un détecteur thermique selon un exemple de l'art antérieur ;
la figure 2A est une vue schématique et partielle, en coupe transversale, d'un détecteur thermique selon un mode de réalisation ;
la figure 2B est une vue de dessus du détecteur thermique de la figure 2A ;
la figure 3A illustre de manière schématique deux absorbeurs de Salisbury et un réflecteur d'un détecteur thermique selon un mode de réalisation ;
la figure 3B illustre des exemples d'un spectre d'absorption totale du détecteur thermique et des spectres d'absorption des absorbeurs de la fig.3A, dans le cas d'un rapport de surface S₂/S₁ égal à 1 ;
la figure 4A illustre des exemples d'un spectre d'absorption totale αₜₒₜ(λ) du détecteur thermique et des spectres d'absorption α₁(λ) et α₂(λ) des absorbeurs de la fig.3A, dans le cas d'un rapport de surface S₂/S₁ égal à 0.5 ;
la figure 4B illustre des exemples d'un spectre d'absorption totale αₜₒₜ(λ) du détecteur thermique et des spectres d'absorption α₁(λ) et α₂(λ) des absorbeurs de la fig.3A, dans le cas d'un rapport de surface S₂/S₁ égal à 2
la figure 5A illustre un exemple du spectre d'absorption totale αₜₒₜ(λ) du détecteur thermique en fonction du rapport de surface S₂/S₁ des absorbeurs ;
la figure 5B illustre plusieurs spectres d'absorption totale αₜₒₜ(λ) du détecteur thermique, pour différentes valeurs du rapport de surface S₂/S₁ des absorbeurs, issus de l'exemple de la fig.5A ;
la figure 6A est une vue schématique et partielle, en coupe transversale, d'un détecteur thermique selon un mode de réalisation ;
la figure 6B est une vue schématique et partielle, selon une autre coupe transversale, du détecteur thermique de la fig.6A ;
la figure 6C est une vue de dessus du détecteur thermique de la figure 6A ;
la figure 7A est une vue schématique et partielle, en coupe transversale, du détecteur thermique selon un mode de réalisation ;
la figure 7B est une vue de dessus du détecteur thermique de la figure 7A.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un détecteur thermique d'un rayonnement électromagnétique, par exemple infrarouge ou térahertz, dans une large bande spectrale de détection Δλₜₒₜ, avec une absorption uniformément élevée sur toute la bande spectrale Δλₜₒₜ, c'est-à-dire que le spectre d'absorption αₜₒₜ(λ) présente une valeur au moins égale à une valeur seuil prédéfinie dans toute la bande spectrale Δλₜₒₜ. A titre d'exemple, la bande spectrale de détection Δλₜₒₜ couvre au moins la gamme LWIR (8-12µm) et s'étend notamment vers les plus faibles longueurs d'onde.

Le détecteur thermique peut faire partie d'une matrice de détecteurs d'un dispositif de détection, où les détecteurs thermiques sont identiques les uns aux autres et sont agencés de manière périodique. Ils comportent chacun d'une membrane absorbante suspendue au-dessus du même substrat de lecture.

La membrane absorbante comporte au moins deux absorbeurs de Salisbury couplés thermiquement à un même transducteur thermomètre (donc l'échauffement des absorbeurs est transmis au transducteur), définissant au moins deux cavités quart d'onde avec un même réflecteur du substrat de lecture. Au moins l'une des cavités quart d'onde présente une longueur d'onde de résonance égale à la longueur d'onde d'antirésonance d'une autre cavité quart d'onde à plus ou moins 2 µm.

Autrement dit, comme détaillé par la suite, la membrane absorbante est configurée de sorte que la première cavité quart d'onde C₁ optimise l'absorption du premier absorbeur à une longueur d'onde de résonance λ_{c1} (longueur d'onde centrale de la bande spectrale d'absorption Δλ₁ du premier absorbeur). Pour cela, le premier absorbeur est espacé du réflecteur d'une distance verticale h₁ égale à λ_{c1}/4n_{eq1}, où n_{eq1} est l'indice de réfraction équivalent du milieu associé à la cavité quart d'onde C₁, à savoir le milieu situé et à la perpendiculaire du premier absorbeur et du réflecteur, ainsi que le milieu de la membrane absorbante situé sur et à la perpendiculaire du premier absorbeur.

De plus, la membrane absorbante est configurée de sorte qu'une deuxième cavité quart d'onde C₂ optimise l'absorption d'un deuxième absorbeur à une longueur d'onde de résonance λ_{c2} (longueur d'onde centrale de la bande d'absorption Δλ₂ du deuxième absorbeur). Pour cela, le deuxième absorbeur est espacé du réflecteur d'une distance verticale h₂ égale à λ_{c2}/4n_{eq2}, où n_{eq2} est l'indice de réfraction équivalent du milieu associé à la cavité quart d'onde C₂. La distance h₂ et/ou l'indice de réfraction n_{eq2} sont choisis de sorte que la longueur d'onde de résonance λ_{c2} soit égale à l'antirésonance de la cavité quart d'onde C₁, c'est-à-dire à λ_{c1}/2, à plus ou moins 2 µm près : λ_{c2} = λ_{c1}/2 ± 2µm, ou encore λ_{c1}/2 - 2µm ≤ λ_{c2} ≤ λ_{c1}/2 + 2µm. Ainsi, la bande spectrale de détection Δλₜₒₜ du détecteur thermique est donc élargie dans la mesure où elle s'étend sur au moins les deux bandes spectrales d'absorption Δλ₁ et Δλ₂.

De plus, de sorte que le spectre d'absorption αₜₒₜ(λ) du détecteur thermique présente une valeur uniformément élevée sur toute la bande spectrale de détection Δλₜₒₜ, le rapport de surface Sᵢ/Sⱼ entre les absorbeurs est compris entre 0.5 et 3, où la surface Sᵢ correspond à la surface totale de l'absorbeur de rang i dont la longueur d'onde de résonance est sensiblement égale (à ±2 µm) à la longueur d'onde d'antirésonance de l'absorbeur de rang j. Ainsi, la contribution de chaque absorbeur, en termes de réponse spectrale, au spectre d'absorption totale αₜₒₜ(λ) est équilibrée, ce qui assure que l'absorption totale est uniformément élevée sur toute la bande spectrale de détection Δλₜₒₜ. La surface S d'un absorbeur est définie comme étant la surface totale de celui-ci, alors situé à une distance h constante du réflecteur, dans la cavité quart d'onde considérée.

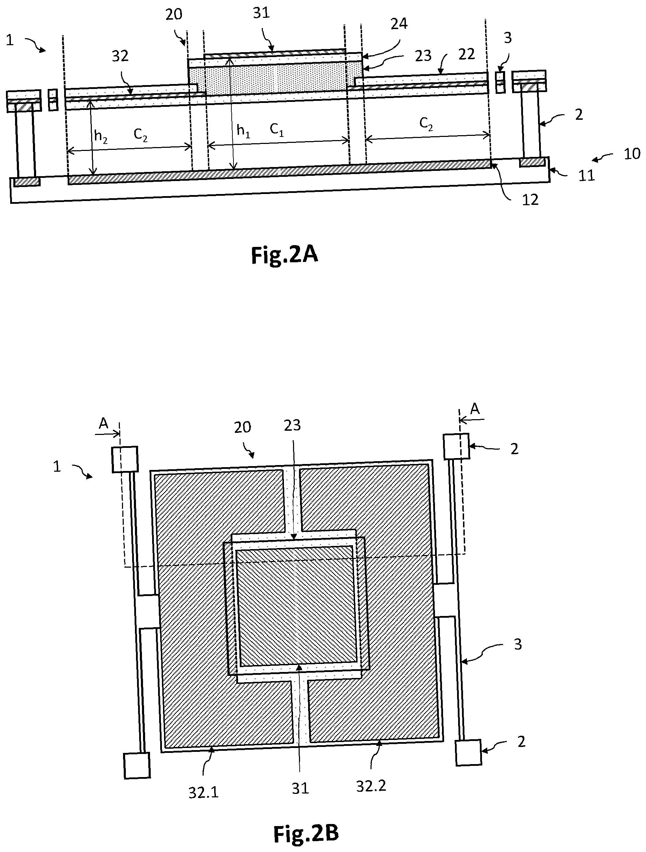

La figure 2A est une vue schématique et partielle d'un détecteur thermique 1 d'un rayonnement électromagnétique, ici d'un rayonnement infrarouge, selon un mode de réalisation, en coupe transversale selon une ligne de coupe AA (cf. fig.2B). La figure 2B est une vue de dessus, schématique et partielle, du détecteur thermique 1 de la fig.2A.

On définit ici et pour la suite de la description un repère direct tridimensionnel XYZ, où le plan XY est sensiblement parallèle au plan d'un substrat de lecture 10 du détecteur thermique 1, l'axe Z étant orienté suivant une direction sensiblement orthogonale au plan XY du substrat de lecture 10, en direction de la membrane absorbante 20. Par ailleurs, les termes « inférieur » et « supérieur » s'entendent comme étant relatifs à un positionnement croissant lorsqu'on s'éloigne du substrat de lecture 10 suivant la direction +Z.

Le substrat de lecture 10 est formé d'un substrat support 11 contenant le circuit de lecture (non représenté) adapté à commander et lire le détecteur thermique 1. Le circuit de lecture peut se présenter sous la forme d'un circuit intégré CMOS. Il comporte ainsi des portions conductrices qui affleurent la face supérieure du substrat de lecture 10, laquelle est sensiblement plane. Les portions conductrices et les vias conducteurs peuvent être réalisés en cuivre, en aluminium et/ou en tungstène, entre autres, par exemple au moyen d'un procédé damascène dans lequel on remplit des tranchées réalisées dans la couche isolante inter-métal.

Le détecteur thermique 1 comporte un réflecteur 12, qui repose sur ou dans le substrat de lecture 10. Il est adapté à réfléchir le rayonnement électromagnétique à détecter en direction de la membrane absorbante 20, et est de préférence réalisé en au moins un matériau métallique. Il peut être recouvert par cette couche de protection, réalisée en un matériau sensiblement inerte à un agent de gravure utilisé ultérieurement pour supprimer la ou les couches sacrificielles qui permettent de réaliser la membrane suspendue 20 ainsi qu'une structure d'encapsulation (qui définit une cavité sous vide dans laquelle se situe la membrane absorbante 20). Le réflecteur 12 s'étend dans le plan XY sous la membrane absorbante 20, en particulier sous les absorbeurs situés dans celle-ci.

Le détecteur thermique 1 comporte une membrane absorbante 20, suspendue au-dessus du substrat de lecture 10 par des piliers d'ancrage 2, et isolée thermiquement de celui-ci par des bras de maintien et d'isolation thermique 3. Les piliers d'ancrage 2 et bras de maintien 3 assurent également une fonction de connexion électrique au circuit de lecture contenu dans le substrat de lecture 10. Les bras de maintien 3 peuvent être formés d'un empilement d'une couche inférieure isolante 21 (par exemple en Al₂O₃ ou silicium amorphe), d'une piste conductrice de polarisation 22 (par ex. en TiN ou NiCr), et d'une couche supérieure isolante 23 (par ex. en Al₂O₃ ou silicium amorphe).

La membrane absorbante 20 comporte un transducteur thermomètre 23, ici formée par une couche thermistance, c'est-à-dire une couche en un matériau dont la résistance électrique varie en fonction de son échauffement thermique, des électrodes de polarisation, et au moins deux absorbeurs 31, 32 couplés thermiquement au même transducteur thermomètre 23.

Dans cet exemple, la membrane absorbante 20 comporte une couche inférieure isolante 21, par exemple réalisée en un matériau diélectrique tel que de l'alumine, un oxyde et/ou un nitrure de silicium, voire en un matériau semiconducteur non intentionnellement dopé tel que du silicium amorphe. Elle peut présenter une épaisseur par exemple comprise entre 5nm et 100nm, de préférence comprise entre 15nm et 50nm.

Des électrodes de polarisation reposent sur la couche inférieure isolante 21. Elles sont réalisées en un matériau électriquement conducteur, ici en un matériau métallique comme par exemple du TiN ou du NiCr, entre autres, d'une épaisseur par exemple comprise entre 5 et 15nm, de préférence entre 6 et 10nm. Comme expliqué par la suite, ces électrodes de polarisation forme ici un absorbeur 32 dit inférieur en couche mince. Cependant, en variante, l'absorbeur inférieur peut être distinct des électrodes de polarisation. Le matériau et l'épaisseur de l'absorbeur inférieur 32 sont de préférence choisis de sorte que sa résistance de surface est sensiblement égale à l'impédance du vide.

L'absorbeur inférieur 32 est donc formé de deux parties 32.1 et 32.2 spatialement distinctes, qui s'étendent à partir des bras de maintien 3 jusqu'à la bordure du transducteur thermomètre 23, pour être en mesure de le polariser électriquement. Dans cet exemple, chaque partie de l'absorbeur inférieur 32 s'étend en forme de C de manière à s'étendre sur une grande partie de la membrane absorbante 20. En revanche, au niveau du transducteur thermomètre 23, les deux parties 31.1 et 31.2 sont suffisamment espacées latéralement dans le plan XY pour ne pas venir à la perpendiculaire de l'absorbeur supérieur 32. La surface S₂ de l'absorbeur inférieur 32 correspond à la somme des surfaces des deux parties distinctes 32.1, 32.2. Chaque partie de l'absorbeur inférieur 32 s'étend ici de manière continue et avec une épaisseur constante. En variante, elle peut s'étendre de manière discontinue et présenter une épaisseur non constante.

L'absorbeur inférieur 32 est situé à une distance h₂ sensiblement constante vis-à-vis du réflecteur 12, formant ainsi une cavité quart d'onde C₂ de la longueur d'onde de résonance λ_{c2}, avec h₂ = λ_{c2}/4n_{eq2}. La longueur d'onde λ_{c2} est une longueur d'onde centrale de la sous-bande spectrale Δλ₂ de la bande spectrale Δλₜₒₜ. On note ici n_{eq2} l'indice de réfraction équivalent du milieu associé à la cavité quart d'onde C₂, à savoir ici le milieu situé à la verticale de l'absorbeur inférieur 32, entre celui-ci et le réflecteur 12, ainsi que le milieu situé sur et à la verticale de l'absorbeur inférieur 32. Comme détaillé par la suite, la distance h₂ et/ou l'indice de réfraction n_{eq2} sont choisis de sorte que la longueur d'onde λ_{c2} est égale, à plus ou moins 2µm près, à la longueur d'onde d'antirésonance λ_{c1}/2 de la cavité quart d'onde C₁.

Le transducteur thermomètre 23 s'étend ici sur et au contact des électrodes de polarisation et de la couche inférieure isolante 21. Il s'agit ici d'un matériau thermistance d'une épaisseur par exemple de l'ordre de quelques dizaines à centaines de nanomètres. Il peut s'agir d'un matériau à base d'un oxyde de vanadium ou de titane, de silicium amorphe. En variante, il peut également s'agir d'une diode (jonction pn ou pin) ou d'un transistor à effet de champ et à structure métal - oxyde - semiconducteur (MOSFET), entre autres.

Une couche supérieure de protection 24 recouvre le transducteur thermomètre 23, ici uniquement sur la face supérieure de ce dernier, mais elle peut le recouvrir entièrement pour assurer une fonction de protection du transducteur thermomètre 23 vis-à-vis d'éventuelles contaminations ou dégradations lors des étapes du procédé de fabrication. Elle peut être réalisée en un matériau électriquement isolant, par exemple un matériau diélectrique tel qu'un oxyde, nitrure ou oxynitrure de silicium, voire de l'alumine, entre autres, d'une épaisseur de quelques dizaines de nanomètres.

La membrane absorbante 20 comporte un deuxième absorbeur 31, dit absorbeur supérieur, formé d'une couche mince réalisée en au moins un matériau adapté à absorber le rayonnement électromagnétique à détecter, par exemple en un matériau métallique tel que du TiN ou du NiCr, entre autre, d'une épaisseur par exemple comprise entre 5 et 15nm, de préférence entre 6 et 10nm. L'absorbeur supérieur 31 est couplé thermiquement au transducteur thermomètre 23. Il repose ici sur la couche supérieure de protection 24, et ne s'étend pas en regard (à la verticale) de l'absorbeur inférieur 32, de manière à éviter de dégrader l'absorption du rayonnement électromagnétique par l'un ou l'autre des absorbeurs.

Le matériau et l'épaisseur de l'absorbeur supérieur 31 sont de préférence choisis de sorte que sa résistance de surface est sensiblement égale à l'impédance du vide. Il s'étend ici de manière continue et avec une épaisseur constante. En variante, il peut s'étendre de manière discontinue et présenter une épaisseur non constante. On note S₁ la surface totale de l'absorbeur supérieur 31.

L'absorbeur supérieur 31 est situé à une distance h₁ sensiblement constante vis-à-vis du réflecteur 12, formant ainsi une cavité quart d'onde C₁ de la longueur d'onde de résonance λ_{c1}, avec h₁ = λ_{c1}/4n_{eq1}. La longueur d'onde λ_{c1} est une longueur d'onde centrale de la sous-bande spectrale Δλ₁ de la bande spectrale Δλₜₒₜ. On note ici n_{eq1} l'indice de réfraction équivalent du milieu associé à la cavité quart d'onde C₁, à savoir ici le milieu situé à la verticale de l'absorbeur supérieur 31, entre celui-ci et le réflecteur 12, ainsi que le milieu situé sur et à la verticale de l'absorbeur supérieur 31.

Selon l'invention, la membrane absorbante 20 comporte donc au moins deux absorbeurs de Salisbury 31, 32 adaptés à absorber le rayonnement électromagnétique dans la bande spectrale de détection Δλₜₒₜ. Elle est configurée de sorte que la longueur d'onde de résonance λ_{c2} associée à la cavité quart d'onde C₂ soit égale, à plus ou moins 2 µm près, à la longueur d'onde d'antirésonance λ_{c1}/2 associée à la cavité quart d'onde C₁. Cette configuration peut être obtenue par l'ajustement de l'une et/ou l'autre des distances h₁ et h₂, comme par l'ajustement de l'un et/ou l'autre d'indices de réfraction équivalents n_{eq1} et n_{eq2} (par le choix des matériaux et épaisseurs).

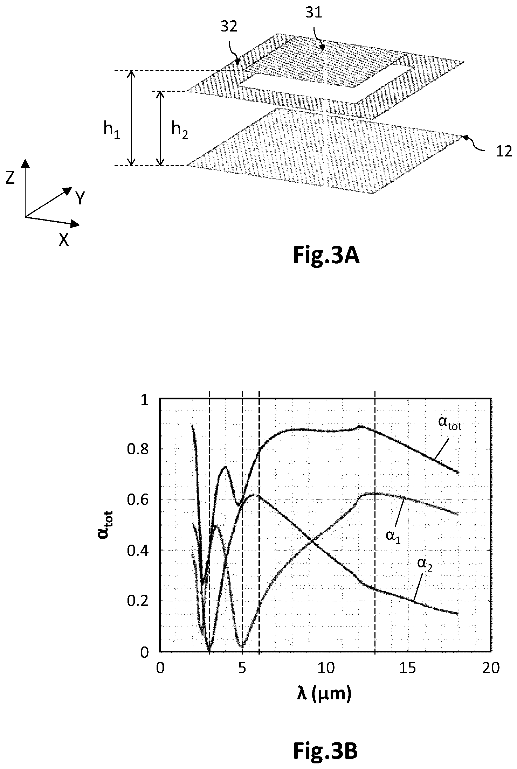

Ainsi, le spectre d'absorption totale αₜₒₜ(λ) du détecteur thermique 1 correspond à la somme du spectre d'absorption α₁(λ) de l'absorbeur supérieur 31 et du spectre d'absorption α₂(λ) de l'absorbeur inférieur 32. La bande spectrale de détection Δλₜₒₜ n'est plus limitée par l'antirésonance de la cavité quart d'onde C₁, et il apparaît qu'elle n'est pas non plus limitée par l'antirésonance de la cavité quart d'onde C₂ (comme détaillé plus loin en référence à la fig.3B).

De plus, le rapport de surface S₂/S₁ est compris entre 0.5 et 3, et de préférence entre 0.8 et 2, et de préférence égal à 1 environ. Ainsi, la contribution de chaque absorbeur 31, 32 au spectre d'absorption totale αₜₒₜ(λ) du détecteur thermique 1 est équilibrée, ce qui permet d'obtenir une valeur d'absorption αₜₒₜ uniformément élevée, au moins égale à une valeur seuil α_{tot,th} prédéfinie, sur toute la bande spectrale Δλₜₒₜ.

Notons que l'absorbeur inférieur 32, qui forme ici également les électrodes de polarisation, présente une surface totale bien plus importante que dans le cas de l'art antérieur où les électrodes sont des pistes étroites et ne forment pas un absorbeur de Salisbury.

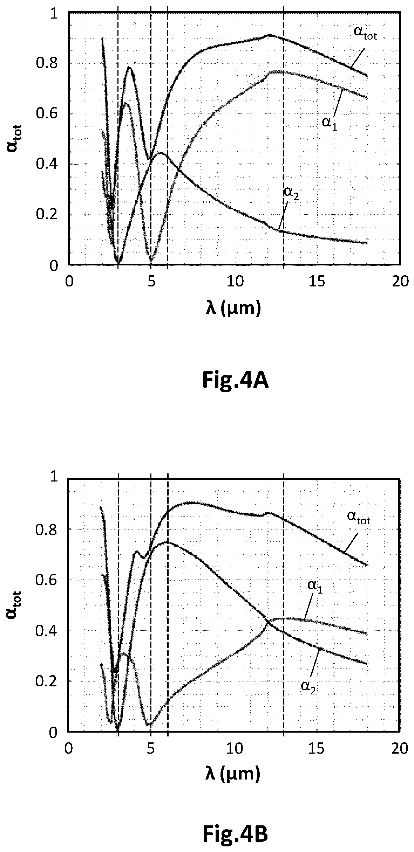

De manière à illustrer la contribution des absorbeurs 31, 32 au spectre d'absorption totale αₜₒₜ(λ) du détecteur thermique 1, on considère maintenant deux absorbeurs 31, 32 et un réflecteur 12 tel que la figure 3A le montre schématiquement. Les figures 3B, 4A et 4B illustrent des exemples de spectre d'absorption total αₜₒₜ(λ) de la membrane absorbante 20 ainsi que ceux α₁(λ) et α₂(λ) de l'absorbeur supérieur 31 et de l'absorbeur inférieur 32, dans le cas où le rapport des surfaces S₂/S₁ est égal à 1 environ (fig.3B), égal à 0.5 environ (fig.4A) et égal à 2 environ (fig.4B).

Dans cet exemple, l'absorbeur inférieur 32 est réalisé en TiN d'une épaisseur de 8nm, et s'étend dans le plan XY en anneau de forme carrée. Il est espacé verticalement du réflecteur 12 d'une distance h₂ égale ici à 1.5µm. Par ailleurs, l'absorbeur supérieur 31 est réalisé en TiN d'une épaisseur de8nm, et s'étend dans le plan XY en forme de carré. Ses dimensions sont ici égales à celles de l'espace intérieur vide de l'absorbeur inférieur 32. Il est espacé verticalement du réflecteur 12 d'une distance h₁=h₂+δ égale ici à 2.5µm. Par ailleurs, le pas pixel est ici égal à 12µm, et le facteur de remplissage ff (pour *fill factor* en anglais), défini par la relation ff=(S₂+S₁)/p² est égal à 80%.

Les spectres d'absorption sont ici obtenus par résolution numérique des équations de Maxwell par éléments finis.

Le spectre d'absorption α₁(λ) de l'absorbeur supérieur 31 présente une valeur maximale autour de la longueur d'onde de résonance λ_{c1} égale ici à 13 µm environ, ainsi qu'une décroissance forte à la longueur d'onde d'antirésonance de 5 µm environ. Par ailleurs, le spectre d'absorption α₂(λ) de l'absorbeur inférieur 32 présente une valeur maximale autour de la longueur d'onde de résonance λ_{c2} égale ici à 6 µm environ, ainsi qu'une décroissance forte à la longueur d'onde d'antirésonance de 3 µm environ. Aussi, il apparaît que le spectre d'absorption αₜₒₜ(λ) ne présente plus de décroissance forte aux longueurs d'onde d'antirésonance de 5 µm (absorption de 60% environ) et de 3µm (absorption de 40% environ).

De plus, la contribution de chaque absorbeur 31, 32 est ici homogène, du fait du rapport de surface S₂/S₁ égal à 1 environ, de sorte que le spectre d'absorption totale αₜₒₜ(λ) est uniformément élevé sur toute la bande spectrale de détection Δλₜₒₜ. Ainsi, si l'on considère que la valeur seuil d'absorption est égale à 40%, la bande spectrale de détection Δλₜₒₜ va alors de 3 µm à plus de 20µm. Si l'on considère 60%, elle s'étend de 5 µm à plus de 20 µm. Et si l'on considère 80%, on s'étend de 6 à 15 µm. Ainsi, la bande spectrale de détection Δλₜₒₜ est considérablement élargie, et le spectre d'absorption totale αₜₒₜ(λ) est uniformément élevé, i.e. au moins égal à la valeur seuil sur toute la bande spectrale Δλₜₒₜ.

Notons ici qu'il est avantageux que les dimensions latérales maximales des absorbeurs 31, 32 soient inférieures ou égales à la longueur d'onde centrale de la bande spectrale de détection Δλₜₒₜ. Dans cet exemple, elle est égale à 11 µm environ pour une bande spectrale Δλₜₒₜ de 6-15µm (valeur seuil d'absorption de 80%). Ici, l'absorbeur supérieur 31 est en forme de carré de côté a de 7.6 µm, et l'absorbeur inférieur 32 est en forme d'anneau carré de côté 10.7 µm. Aussi, les dimensions latérales des absorbeurs sont inférieures à la longueur d'onde centrale de 11 µm.

Il apparaît alors que cette configuration conduit à maximiser l'efficacité de collection optique du rayonnement électromagnétique incident. En effet, l'absorbeur supérieur 31, alors que sa surface relative est de 40%, absorbe jusqu'à 65% autour de sa longueur d'onde de résonance 13 µm. De même, l'absorbeur inférieur 32, alors que sa surface relative est également de 40%, absorbe jusqu'à 60% autour de sa longueur d'onde de résonance 5 µm. L'association des deux absorbeurs 31, 32, qui couvrent une surface totale relative de 80% de la surface du pixel de détection, permet d'absorber plus de 80% du rayonnement incident entre 6 et 15µm.

Il est possible de modifier le spectre d'absorption totale αₜₒₜ(λ) du détecteur thermique 1 en ajustant la contribution de chaque spectre d'absorption α₁(λ) et α₂(λ) via le rapport de surface S₂/S₁.

Dans le cas où le rapport de surface S₂/S₁ est égal à 0.5 (cf. fig.4A), on réduit ici la contribution de l'absorbeur inférieur 32 au profit de celle de l'absorbeur supérieur 31. Et dans le cas où le rapport de surface S₂/S₁ est égal à 2 (cf. fig.4B), on augmente la contribution de l'absorbeur inférieur 32 au détriment de celle de l'absorbeur supérieur 31.

Ainsi, dans le cas où la valeur d'absorption seuil est égale à 60%, la bande spectrale d'absorption Δλₜₒₜ va de 6 µm à plus de 20 µm dans le cas où S₂/S₁ = 0.5 (fig.4A) avec une absorption maximale de 90% autour de 12 µm.En revanche, elle va de 4 µm à 20 µm dans le cas où S₂/S₁ = 2 (fig.4B) avec une absorption maximale de 90% autour de 7-8 µm.

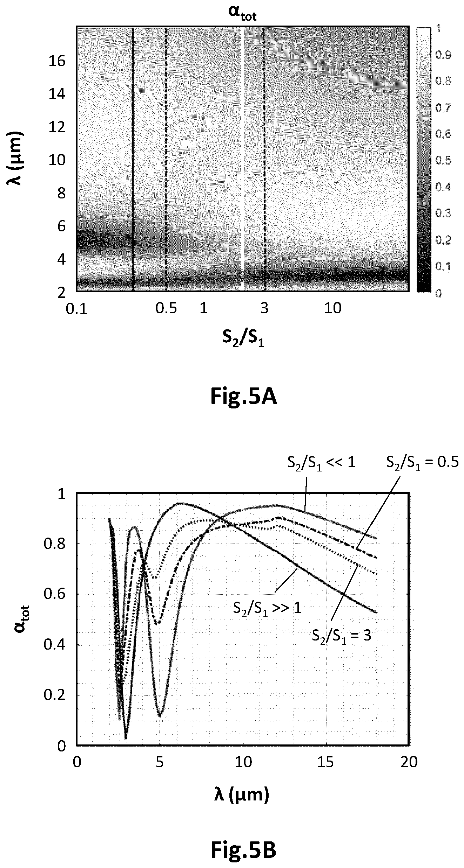

La figure 5A illustre un exemple de spectre d'absorption totale αₜₒₜ(λ) en fonction du rapport de surface S₂/S₁ dans le cas de la configuration de la fig.3A, et la figure 5B illustre les spectres d'absorption totale αₜₒₜ(λ) dans le cas où S₂/S₁ = 0.5, où S₂/S₁ = 3, et dans les cas où S₂/S₁ très petit (S₂/S₁<<1 : l'absorbeur supérieur 31 remplit entièrement la surface disponible) et où S₂/S₁ très grand (S₂/S₁>>1 : l'absorbeur inférieur 32 remplit entièrement la surface disponible).

Concernant le spectre d'absorption totale αₜₒₜ(λ) avec S₂/S₁ très petit, on retrouve un spectre piqué au niveau de la longueur d'onde d'antirésonance de la cavité quart d'onde C₁, i.e. autour de 5 µm. De même, le spectre d'absorption totale αₜₒₜ(λ) avec S₂/S₁ très grand, on retrouve un spectre piqué au niveau de la longueur d'onde d'antirésonance de la cavité quart d'onde C₂, i.e. autour de 3 µm. Ces limitations d'absorption ne se retrouvent pas dans les spectres d'absorption totale αₜₒₜ(λ) avec S₂/S₁ = 0.5 et S₂/S₁ = 3.

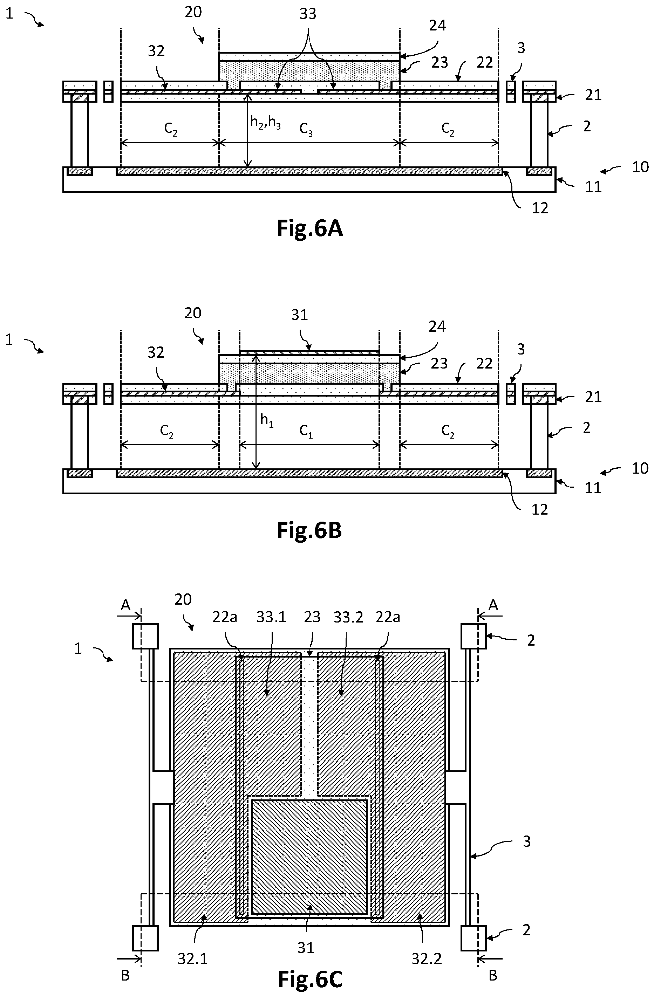

La figure 6A et la figure 6B sont des vues schématiques et partielles d'un détecteur thermique 1 d'un rayonnement électromagnétique selon un mode de réalisation, en coupe transversale respectivement sur les lignes de coupe AA et BB (cf. fig.6C). La figure 6C est une vue de dessus du détecteur thermique 1 des fig.6A et 6B.

Dans cet exemple, la membrane absorbante 20 comporte un même transducteur thermomètre 23 couplé thermiquement à plus de deux absorbeurs, ici à trois absorbeurs 31, 32, 33 formant trois cavités quart d'onde C₁, C₂, C₃ distinctes en termes de bande spectrale d'absorption.

La membrane absorbante 20 comporte ici une couche inférieure isolante 21, une couche mince métallique en deux parties spatialement distinctes dans le plan XY qui forment des électrodes de polarisation ainsi que les deuxième et troisième absorbeurs 32, 33, une couche supérieure isolante 22, le transducteur thermomètre 23 (ici une couche d'un matériau thermistance) qui repose sur la couche supérieure isolante et la traverse au niveau d'ouvertures 22a pour venir au contact de la couche métallique, une couche supérieure de protection 24 qui recouvre le transducteur thermomètre 23, et une couche mince métallique qui repose sur le transducteur thermomètre 23 et forme le premier absorbeur 31 (absorbeur supérieur).

L'absorbeur supérieur 31 est situé sur le transducteur thermomètre 23, à la distance h₁ du réflecteur 12. La cavité quart d'onde C₁ permet d'optimiser l'absorption par l'absorbeur supérieur 31 à la longueur d'onde λ_{c1} de la bande spectrale Δλ₁. Son milieu comporte notamment la couche supérieure de protection 24, le matériau thermistance 23 et les deux couches isolantes 22, 21. Comme le montre la fig.6C, l'absorbeur supérieur 31 ne s'étend que sur une partie seulement de la surface du transducteur thermomètre 23, ici sur environ la moitié de la surface de celui-ci.

Par ailleurs, la couche métallique, formée de deux parties qui sont les électrodes de polarisation, forme un deuxième absorbeur 32 (cavité quart d'onde C₂) espacé de la distance h₂ du réflecteur 12. Dans cette cavité quart d'onde C₂, le deuxième absorbeur 32 s'étend sur la membrane absorbante 20 sans être recouvert par le transducteur thermomètre 23. L'absorption par ce deuxième absorbeur 32 a lieu dans une sous-bande spectrale Δλ₂, centrée sur la longueur d'onde λ_{c2}. Le milieu associé à cette cavité quart d'onde C₂ comprend ici notamment les deux couches isolantes 21, 22.

Dans la troisième cavité quart d'onde C₃, la couche métallique s'étend sur la membrane absorbante 20 en étant recouverte par le transducteur thermomètre 23 (mais non recouverte par le premier absorbeur). Plus précisément, les deux parties 33.1 et 33.2 de la couche métallique recouvertes par le transducteur thermomètre 23 forment le troisième absorbeur 33. Celui-ci est espacé de la même distance h₂ du réflecteur 12 que le deuxième absorbeur 32. L'absorption par ce troisième absorbeur 33 a lieu dans une sous-bande spectrale Δλ₃ centrée sur la longueur d'onde λ_{c3}. Le milieu associé à cette cavité quart d'onde C₃ comprend ici notamment la couche supérieure de protection 24, le transducteur thermomètre 23 et les deux couches isolantes 22, 21.

Ainsi, les trois cavités quart d'onde C₁, C₂ et C₃ sont dimensionnées, en termes de hauteur h₁ et h₂ (ici la distance h₃ du troisième absorbeur est égale à h₂) et d'indice de réfraction équivalent n_{eq1}, n_{eq2} et n_{eq3} pour obtenir une large bande spectrale de détection Δλₜₒₜ tout en maintenant une valeur d'absorption αₜₒₜ uniformément au-dessus d'une valeur de référence. Ainsi, la cavité quart d'onde C₂ peut être configurée pour absorber de manière optimale à l'antirésonance de la cavité quart d'onde C₁. La cavité quart d'onde C₃ peut être configurée pour absorber dans une bande spectrale Δλ₃ comprise entre Δλ₁ et Δλ₂, par exemple en ajustant l'épaisseur de telle ou telle couche de la membrane absorbante 20 située dans la cavité quart d'onde C₃.

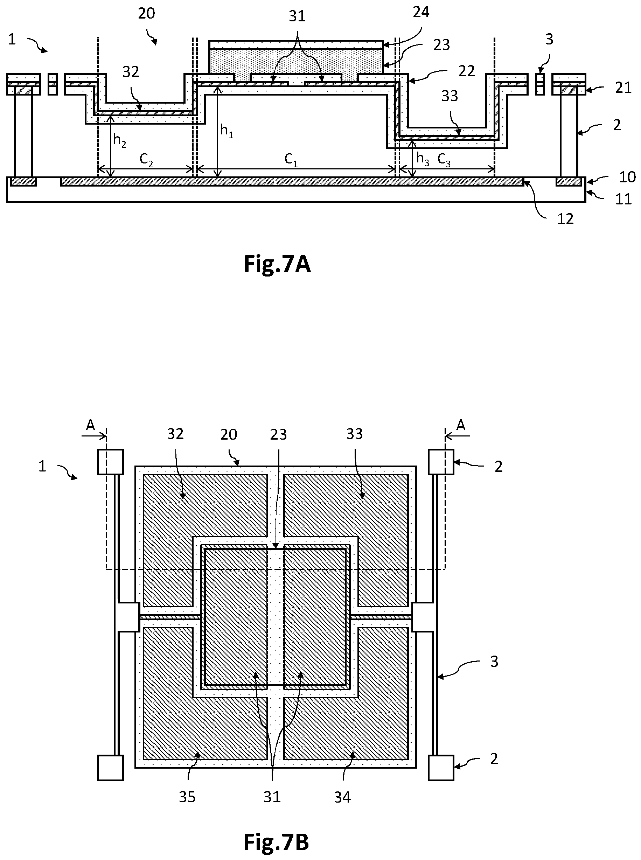

La figure 7A est une vue schématique et partielle, en coupe transversale, d'un détecteur thermique 1 d'un rayonnement électromagnétique selon un mode de réalisation, en coupe transversale selon la ligne de coupe AA (cf. fig.7B). La figure 7B est une vue de dessus du détecteur thermique 1 de la fig.7A.

Dans cet exemple, la membrane absorbante 20 comporte un même transducteur thermomètre 23 couplé thermiquement à plus de deux absorbeurs, ici à cinq absorbeurs 31, 32, 33, 34 et 35 formant cinq cavités quart d'onde distinctes en termes de bande spectrale d'absorption.

La membrane absorbante 20 comporte ici une couche inférieure isolante 21, une couche mince métallique en plusieurs parties spatialement distinctes dans le plan XY qui forment des électrodes de polarisation et plusieurs absorbeurs différents, une couche supérieure isolante 22, le transducteur thermomètre 23 (ici une couche d'un matériau thermistance) qui repose sur la couche supérieure isolante et la traverse au niveau d'ouvertures 22a pour venir au contact de la couche métallique. Une couche supérieure de protection 24 recouvre le transducteur thermomètre 23.

Les différentes parties de la couche mince métallique forment les différents absorbeurs 31 à 35 et définissent les cavités quart d'onde. Dans cet exemple, il n'y a pas d'absorbeur supérieur qui repose sur le transducteur thermomètre 23, mais en variante, un tel absorbeur supérieur peut être présent (auquel cas il n'y aurait pas d'absorbeur recouvert par le transducteur thermomètre 23).

Deux parties centrales forment le premier absorbeur 31, espacé d'une distance h₁ vis-à-vis du réflecteur 12. Elles sont recouvertes par le transducteur thermomètre 23, et définissent la cavité quart d'onde C₁ de longueur d'onde de résonance λ_{c1} dans la bande spectrale Δλ₁. Le milieu d'indice de réfraction n_{eq1} comprend notamment le transducteur thermomètre 23 et les deux couches isolantes 21, 22.

Une partie latérale forme un autre absorbeur 35, espacé de la même distance h₁ vis-à-vis du réflecteur 12. Elle n'est pas recouverte par le transducteur thermomètre 23, et elle définit la cavité quart d'onde C₅ de longueur d'onde de résonance λ_{c5} dans la bande spectrale Δλ₅. Le milieu d'indice de réfraction n_{eq5} comprend notamment les deux couches isolantes 21, 22.

Trois autres parties latérales forment différents absorbeurs 32, 33, 34. Elles sont espacées de la distance h₂, h₃ et h₄ vis-à-vis du réflecteur 12, différentes entre elles et de la valeur h₁. Elles ne sont pas recouvertes par le transducteur thermomètre 23, et elles définissent des cavités quart d'onde C₂, C₃ et C₄ dont les longueurs d'onde de résonance sont respectivement λ_{c2}, λ_{c3}, et λ_{c4}. Les milieux d'indice de réfraction n_{eq2}, n_{eq3} et n_{eq4} comprennent essentiellement les deux couches isolantes.

Aussi, la membrane absorbante comporte différents étages où sont situés les absorbeurs 32, 33, 34. Elle comporte donc des parties planes où les absorbeurs 32, 33, 34 sont distants du réflecteur 12 des distances respectives h₂, h₃ et h₄, raccordées à la partie plane principale où se situe le transducteur thermomètre 23 par des parties de raccord verticales (comme représenté) ou inclinées. Les parties planes où sont situées les absorbeurs 32, 33, 34 forment donc un décrochement de la membrane absorbante 20 vis-à-vis de la partie plane principale.

Ainsi, la membrane absorbante 20 est configurée, en termes de hauteur h₁ à h₅ et d'indice de réfraction équivalent n_{eq1} à n_{eq5}, de manière à obtenir une large bande spectrale de détection Δλₜₒₜ tout en maintenant une valeur d'absorption αₜₒₜ uniformément au-dessus d'une valeur de référence. Plusieurs cavités quart d'onde peuvent être configurées pour absorber de manière optimale à l'antirésonance d'autres cavités quart d'onde. D'autres cavités quart d'onde peuvent également être configurées pour absorber dans une bande spectrale comprise entre celles d'autres cavités quart d'onde.

Des modes de réalisation particuliers viennent d'être décrits. Différentes variantes et modifications apparaîtront à l'homme du métier.

## Revendications

1. Détecteur thermique (1), adapté à absorber un rayonnement électromagnétique dans une bande spectrale prédéfinie Δλₜₒₜ, comportant :
∘ un substrat de lecture (10), comportant : un circuit de lecture ; et un réflecteur (12) adapté à réfléchir le rayonnement électromagnétique ;
∘ une membrane absorbante (20), suspendue au-dessus du substrat de lecture (10), isolée thermiquement du substrat de lecture (10), comportant un transducteur thermomètre (23) connecté électriquement au circuit de lecture, et comportant :
• un premier absorbeur (31) en couche mince, d'une surface totale S₁,
▪ couplé thermiquement au transducteur thermomètre (23),
▪ adapté à absorber le rayonnement électromagnétique dans une sous-bande spectrale Δλ₁ de la bande spectrale Δλₜₒₜ, centrée sur une longueur d'onde λ_{c1}, et est espacé du réflecteur (12) d'une valeur h₁ égale à λ_{c1}/4n_{eq1} de manière à former avec celui-ci une première cavité quart d'onde C₁ pour la longueur d'onde λ_{c1}, n_{eq1} étant un indice de réfraction du milieu associé à la première cavité quart d'onde C₁;
• au moins un deuxième absorbeur (32) en couche mince, d'une surface totale S₂,
▪ couplé thermiquement audit transducteur thermomètre (23),
▪ disposé dans la membrane absorbante (20) de sorte à ne pas être recouvert par le premier absorbeur (31),
∘ **caractérisé en ce que** le deuxième absorbeur (32) est adapté à absorber le rayonnement électromagnétique dans une sous-bande spectrale Δλ₂ de la bande spectrale Δλₜₒₜ, centrée sur une longueur d'onde λ_{c2}, et est espacé du réflecteur (12) d'une valeur h₂ égale à λ_{c2}/4n_{eq2} de manière à former avec celui-ci une deuxième cavité quart d'onde C₂ pour la longueur d'onde λ_{c2}, n_{eq2} étant un indice de réfraction du milieu associé à la deuxième cavité quart d'onde C₂, la sous-bande spectrale Δλ₂ étant centrée sur la longueur d'onde λ_{c2} égale à λ_{c1}/2 à plus ou moins 2µm près,
∘ et **en ce que** les premier et deuxième absorbeurs (31, 32) présentent des surfaces totales telles qu'un rapport de surface S₂/S₁ est compris entre 0.5 et 3.

2. Détecteur thermique (1) selon la revendication 1, dans lequel le premier absorbeur (31) repose sur le transducteur thermomètre (23).

3. Détecteur thermique (1) selon la revendication 1 ou 2, dans lequel le deuxième absorbeur (32) s'étend dans la membrane absorbante (20) sans être recouvert par le transducteur thermomètre (23).

4. Détecteur thermique (1) selon la revendication 3, dans lequel le deuxième absorbeur (32) est formé par des parties (32.1, 32.2) d'une couche métallique, formant, d'une part, des pistes de polarisation au niveau de bras de maintien (3) assurant le maintien et l'isolation thermique de la membrane absorbante (20), et d'autre part, des électrodes de polarisation venant au contact du transducteur thermomètre (23).

5. Détecteur thermique (1) selon la revendication 4, dans lequel la couche métallique s'étend de manière plane dans les bras de maintien (3) et dans la membrane absorbante (20).

6. Détecteur thermique (1) selon l'une quelconque des revendications 1 à 5, comportant un troisième absorbeur (33) adapté à absorber le rayonnement électromagnétique dans une sous-bande spectrale Δλ₃ de la bande spectrale Δλₜₒₜ, centrée sur une longueur d'onde λ_{c3}, et est espacé du réflecteur (12) d'une valeur h₃ égale à λ_{c3}/4n_{eq3} de manière à former avec celui-ci une cavité quart d'onde C₃ pour une longueur d'onde λ_{c3}, n_{eq3} étant un indice de réfraction du milieu associé à la cavité quart d'onde C₃, la longueur d'onde λ_{c3} étant située entre les longueurs d'onde λ_{c1} et λ_{c2}.

7. Détecteur thermique (1) selon la revendication 6, dans lequel la distance h₃ est égale à la distance h₂, le troisième absorbeur (33) étant recouvert par le transducteur thermomètre (23).

8. Détecteur thermique (1) selon l'une quelconque des revendications 1 à 7, comportant au moins un absorbeur adapté à absorber le rayonnement électromagnétique dans une sous-bande spectrale Δλ₄ de la bande spectrale Δλₜₒₜ, centrée sur une longueur d'onde λ_{c4}, et est espacé du réflecteur (12) d'une valeur h₄ égale à λ_{c4}/4n_{eq4} de manière à former avec celui-ci une cavité quart d'onde C₄ pour une longueur d'onde λ_{c4}, n_{eq4} étant un indice de réfraction du milieu associé à la cavité quart d'onde C₄, l'absorbeur de la cavité quart d'onde C₄ étant situé dans une partie plane de la membrane absorbante (20) formant un décrochement par rapport à un plan principal dans lequel s'étend une couche métallique formant des pistes de polarisation situées dans des bras de maintien (3) et des électrodes de polarisation au contact du transducteur thermomètre (23).

9. Détecteur thermique (1) selon l'une quelconque des revendications 1 à 8, dans lequel la bande spectrale de détection Δλₜₒₜ comprend la bande spectrale LWIR allant de 8 à 12µm.

10. Détecteur thermique (1) selon l'une quelconque des revendications 1 à 9, présentant une absorption au moins égale à 80% dans toute la bande spectrale de détection Δλₜₒₜ.

## Patentansprüche

1. Wärmemelder (1), der dazu ausgelegt ist, eine elektromagnetische Strahlung in einem vordefinierten Spektralband Δλₜₒₜ zu absorbieren, und der Folgendes aufweist:
∘ ein Lesesubstrat (10), das Folgendes aufweist: eine Leseschaltung; und einen Reflektor (12), der dazu ausgelegt ist, die elektromagnetische Strahlung zu reflektieren;
∘ eine Absorptionsmembran (20), die über dem Lesesubstrat (10) aufgehängt ist, thermisch vom Lesesubstrat (10) isoliert ist, einen Thermometerwandler (23) aufweist, der elektrisch mit der Leseschaltung verbunden ist, und Folgendes aufweist:
• einen ersten Dünnschichtabsorber (31) mit einer Gesamtfläche S₁,
■ der thermisch mit dem Thermometerwandler (23) gekoppelt ist,
■ der dazu ausgelegt ist, die elektromagnetische Strahlung in einem Spektralunterband Δλ₁ des Spektralbands Δλₜₒₜ zu absorbieren, das auf eine Wellenlänge λ_{c1} zentriert ist und zu dem Re flektor (12) mit einem Wert h₁ vong leich λ_{c1}/4n_{eq1} beabstandet ist, um mit diesem einen ersten Viertelwellenhohlraum C₁ für die Wellenlänge λ_{c1} zu bilden, wobei n_{eq1} ein Brechungsindex des Mediums ist, das mit dem ersten Viertelwellenhohlraum C₁ verbunden ist;
• mindestens einen zweiten Dünnschichtabsorber (32) mit einer Gesamtfläche S₂,
■ der thermisch mit dem Thermometerwandler (23) gekoppelt ist,
■ der in der Absorptionsmembran (20) so angeordnet ist, dass er nicht vom ersten Absorber (31) bedeckt wird,
∘ **dadurch gekennzeichnet, dass** der zweite Absorber (32) dazu ausgelegt ist, die elektromagnetische Strahlung in einem Spektralunterband Δλ₂ des Spektralbands Δλₜₒₜ zu absorbieren, das auf einer Wellenlänge λ_{c2} zentriert ist, und vom Reflektor (12) mit einem Wert h₂ gleich λ_{c2}/4n_{eq2} so beabstandet ist, um mit diesem einen zweiten Viertelwellenhohlraum C₂ für die Wellenlänge λ_{c2} zu bilden, wobei n_{eq2} ein Brechungsindex des Mediums ist, das mit dem zweiten Viertelwellenhohlraum C₂ verbunden ist, wobei das Spektralunterband Δλ₂ auf der Wellenlänge λ_{c2} gleich λ_{c1}/2 mit einer Genauigkeit von mehr oder weniger 2 µm zentriert ist,
∘ und dass der erste und zweite Absorber (31, 32) Gesamtflächen aufweisen, so dass ein Flächenverhältnis S₂/S₁ zwischen 0,5 und 3 beträgt.

2. Wärmemelder (1) nach Anspruch 1, wobei der erste Absorber (31) auf dem Thermometerwandler (23) aufliegt.

3. Wärmemelder (1) nach Anspruch 1 oder 2, wobei sich der zweite Absorber (32) in die Absorptionsmembran (20) erstreckt, ohne vom Thermometerwandler (23) bedeckt zu sein.

4. Wärmemelder (1) nach Anspruch 3, wobei der zweite Absorber (32) aus Teilen (32.1, 32.2) einer Metallschicht gebildet ist, die einerseits Polarisationsbahnen am Haltearm (3), die für den Halt und die thermische Isolierung der Absorptionsmembran (20) sorgen, und andererseits Polarisationselektroden bilden, die mit dem Thermometerwandler (23) in Kontakt kommen.

5. Wärmemelder (1) nach Anspruch 4, wobei sich die Metallschicht ebenerdig in den Haltearmen (3) und in der Absorptionsmembran (20) erstreckt.

6. Wärmemelder (1) nach einem der Ansprüche 1 bis 5, der einen dritten Absorber (33) aufweist, der dazu ausgelegt ist, die elektromagnetische Strahlung in einem Spektralunterband Δλ₃ des Spektralbands Δλₜₒₜ zu absorbieren, das auf eine Wellenlänge λ_{C3} zentriert ist und vom Reflektor (12) mit einem Wert h₃ gleich λ_{C3}/4n_{eq3} beabstandet ist, um mit diesem einen Viertelwellenhohlraum C₃ für eine Wellenlänge λ_{C3} zu bilden, wobei n_{eq3} ein Brechungsindex des Mediums ist, das mit dem Viertelwellenhohlraum C₃ verbunden ist, wobei die Wellenlänge λ_{C3} zwischen den Wellenlängen λ_{c1} und λ_{c2} liegt.

7. Wärmemelder (1) nach Anspruch 6, wobei der Abstand h₃ gleich dem Abstand h₂ ist, wobei der dritte Absorber (33) vom Thermometerwandler (23) bedeckt ist.

8. Wärmemelder (1) nach einem der Ansprüche 1 bis 7, der mindestens einen Absorber aufweist, der dazu ausgelegt ist, die elektromagnetische Strahlung in einem Spektralunterband Δλ₄ des Spektralbands Δλₜₒₜ zu absorbieren, das auf eine Wellenlänge λ_{C4} zentriert ist und vom Reflektor (12) mit einem Wert h₄ gleich λ_{c4}/4n_{eq4} beabstandet ist, um mit ihm ein Viertelwellenhohlraum C₄ für eine Wellenlänge λ_{C4} zu bilden, wobei n_{eq4} ein Brechungsindex des Mediums ist, das mit dem Viertelwellenhohlraum C₄ verbunden ist, wobei sich der Absorber des Viertelwellenhohlraums C₄ in einem ebenerdigen Teil der absorbierenden Membran (20) befindet, der eine Ablösung in Bezug auf eine Hauptebene bildet, in der sich eine Metallschicht erstreckt, die Polarisationsbahnen, die sich in Haltearmen (3) befinden, und Polarisationselektroden bilden, die mit dem Thermometerwandler (23) in Kontakt stehen.

9. Wärmemelder (1) nach einem der Ansprüche 1 bis 8, wobei das Detektionsspektralband Δλₜₒₜ das LWIR-Spektralband von 8 bis 12µm umfasst.

10. Wärmemelder (1) nach einem der Ansprüche 1 bis 9, der eine Absorption von mindestens 80 % in dem Detektionsspektralband Δλₜₒₜ aufweist.

## Claims

1. Thermal detector (1), configured to absorb electromagnetic radiation in a predefined spectral band Δλₜₒₜ, having:
∘ a readout substrate (10), having: a readout circuit; and a reflector (12) configured to reflect the electromagnetic radiation;
∘ an absorbent membrane (20) suspended above the readout substrate (10), thermally insulated from the readout substrate (10), having a thermometer transducer (23) electrically connected to the readout circuit, and having:
• a first thin-film absorber (31), with a total surface area S₁,
▪ thermally coupled to the thermometer transducer (23),
▪ configured to absorb the electromagnetic radiation in a spectral sub-band Δλ₁ of the spectral band Δλₜₒₜ, centred on a wavelength λ_{c1}, and is spaced from the reflector (12) by a value h₁ equal to λ_{c1}/4n_{eq1} so as to form therewith a first quarter-wave cavity C₁ for the wavelength λ_{c1}, n_{eq1} being a refractive index of the medium associated with the first quarter-wave cavity C₁;
• at least one second thin-film absorber (32), with a total surface area S₂,
▪ thermally coupled to said thermometer transducer (23),
▪ arranged in the absorbent membrane (20) so as not to be covered by the first absorber (31),
∘ **characterised in that** the second absorber (32) is configured to absorb the electromagnetic radiation in a spectral sub-band Δλ₂ of the spectral band Δλₜₒₜ, centred on a wavelength λ_{c2}, and is spaced from the reflector (12) by a value h₂ equal to λ_{c2}/4n_{eq2} so as to form therewith a second quarter-wave cavity C₂ for the wavelength λ_{c2}, n_{eq2} being a refractive index of the medium associated with the second quarter-wave cavity C₂, the spectral sub-band Δλ₂ being centred on the wavelength λ_{c2} equal to λ_{c1}/2 within plus or minus 2 µm,
∘ and **in that** the first and second absorbers (31, 32) have total surface areas such that a surface area ratio S₂/S₁ is comprised between 0.5 and 3.

2. Thermal detector (1) according to Claim 1, wherein the first absorber (31) rests on the thermometer transducer (23).

3. Thermal detector (1) according to Claim 1 or 2, wherein the second absorber (32) extends into the absorbent membrane (20) without being covered by the thermometer transducer (23).

4. Thermal detector (1) according to Claim 3, wherein the second absorber (32) is formed by parts (32.1, 32.2) of a metallic layer, forming, on the one hand, polarisation tracks at holding arms (3) ensuring the support and thermal insulation of the absorbent membrane (20), and on the other hand, polarisation electrodes coming into contact with the thermometer transducer (23).

5. Thermal detector (1) according to Claim 4, wherein the metallic layer extends in a planar manner into the holding arms (3) and into the absorbent membrane (20).

6. Thermal detector (1) according to one of Claims 1 to 5, having a third absorber (33) configured to absorb the electromagnetic radiation in a spectral sub-band Δλ₃ of the spectral band Δλₜₒₜ, centred on a wavelength λ_{c3}, and is spaced from the reflector (12) by a value h₃ equal to λ_{c3}/4n_{eq3} so as to form therewith a quarter-wave cavity C₃ for a wavelength λ_{c3}, n_{eq3} being a refractive index of the medium associated with the quarter-wave cavity C₃, the wavelength λ_{c3} being between the wavelengths λ_{c1} and λ_{c2}.

7. Thermal detector (1) according to Claim 6, wherein the distance h₃ is equal to the distance h₂, the third absorber (33) being covered by the thermometer transducer (23).

8. Thermal detector (1) according to one of Claims 1 to 7, having at least one absorber configured to absorb the electromagnetic radiation in a spectral sub-band Δλ₄ of the spectral band Δλₜₒₜ, centred on a wavelength λ_{c4}, and is spaced from the reflector (12) by a value h₄ equal to λ_{c4}/4n_{eq4} so as to form therewith a quarter-wave cavity C₄ for a wavelength λ_{c4}, n_{eq4} being a refractive index of the medium associated with the quarter-wave cavity C₄, the absorber of the quarter-wave cavity C₄ being in a flat part of the absorbent membrane (20) forming a step with respect to a main plane in which a metallic layer extends forming polarisation tracks located in the holding arms (3) and polarisation electrodes in contact with the thermometer transducer (23).

9. Thermal detector (1) according to one of Claims 1 to 8, wherein the spectral band of detection Δλₜₒₜ comprises the spectral band LWIR ranging from 8 to 12 µm.

10. Thermal detector (1) according to one of Claims 1 to 9, having absorption at least equal to 80% across the entire spectral band of detection Δλₜₒₜ.
